# EUROPÄISCHE PATENTSCHRIFT

(11) **EP 1 293 396 B1**
(45) Veröffentlichungstag und Bekanntmachung des Hinweises auf die Patenterteilung: **12.10.2005**
(21) Anmeldenummer: 02019109.4
(22) Anmeldetag: 29.08.2002
(51) Int. Cl.: B60R 21/16

(54) **Verfahren zum Falten eines Gassacks für ein Fahrzeuginsassen-Rückhaltesystem sowie gefalteter Gassack**
Method for folding an airbag for a vehicle passenger restraint system as well as the folded airbag
Procédé de pliage d'un coussin gonflable pour un système de retenue des occupants d'un véhicule et coussin gonflable ainsi plié

(30) Priorität: 14.09.2001 DE 10145381
(43) Veröffentlichungstag der Anmeldung: 19.03.2003
(73) Patentinhaber: TRW Automotive Safety Systems GmbH, 63743 Aschaffenburg (DE)
(72) Erfinder: Bohn, Stefan, 63773 Goldbach (DE)
(74) Vertreter: Sties, Jochen

(56) Entgegenhaltungen:
- EP-A- 1 197 401
- DE-A- 19 845 721
- US-A- 6 115 998

## Beschreibung

Die Erfindung betrifft ein Verfahren zum Falten eines Gassacks für ein Fahrzeuginsassen-Rückhaltesystem. Die Erfindung betrifft ferner einen gefalteten Gassack für ein Fahrzeuginsassen-Rückhaltesystem.

Es sind eine Vielzahl von Verfahren bekannt, um einen Gassack für ein Fahrzeuginsassen-Rückhaltesystem aus einem ungefalteten Zustand in einen kompakt zusammengefalteten Zustand zu überführen, in welchem der Gassack in einem Gehäuse aufgenommen werden kann. Bei einem bekannten Verfahren werden Faltschwerter verwendet, die auf den Gassack aufgelegt werden und Faltkanten bilden, entlang denen der Gassack zusammengefaltet wird. Ein anderes bekanntes Verfahren verwendet Schieber, mit denen der Gassack zusammengeschoben wird. Der Nachteil aller dieser Verfahren liegt in dem hohen Aufwand zu seiner Durchführung.

Ein weiteres Verfahren zum Falten eines Gassacks ist in der US 6 115 998 offenbart. Hierbei wird der Gassack mittels eines Zugbandes zusammengezogen, das sich um den kreisförmig ausgebreiteten Gassack erstreckt. Beim Falten wird der Gassack auf seinen Mittelpunkt zu zusammengezogen.

Die Aufgabe der Erfindung besteht darin, ein Verfahren zum Falten eines Gassacks zu schaffen, das kostengünstig durchgeführt werden kann.

Zu diesem Zweck ist erfindungsgemäß ein Verfahren zum Falten eines Gassacks mittels der folgenden Schritte vorgesehen: Zunächst wird der Gassack zwischen einer Unterlage und einem Gegenhalter entfaltet, wobei sich um den Gassack herum eine Zughülle erstreckt, die an einem ersten Ende durch den Gegenhalter hindurchgeführt ist, wobei die Durchführung der Zughülle durch den Gegenhalter einen Verlauf hat, welcher der Kontur entspricht, die der gefaltete Gassack haben soll. Dann wird die Zughülle mittels des ersten Endes aus dem Raum zwischen der Unterlage und dem Gegenhalter herausgezogen, so daß der Gassack im Inneren der Zughülle zusammengeschoben wird. Der Gassack wird also, ohne daß aufwendig zu bewegende Schieber oder Faltschwerter notwendig sind, zwischen dem Gegenhalter und der Unterlage auf eine kompakte Form zusammengeschoben. Der Abstand zwischen der Unterlage und dem Gegenhalter entspricht dabei vorzugsweise der Höhe des Gehäuses, in dem der Gassack im zusammengefalteten Zustand aufgenommen wird. Die Abmessungen des Gassacks im zusammengeschobenen Zustand entsprechen dann exakt den Abmessungen der Aufnahme im Gehäuse.

Gemäß einer Ausführungsform der Erfindung ist vorgesehen, daß die Zughülle ein zweites Ende hat, das durch eine Durchführung in der Unterlage geführt ist, wobei die Durchführung einen Verlauf hat, welcher der Kontur entspricht, die der gefaltete Gassack haben soll, und daß die Zughülle auch mittels des zweiten Endes aus dem Raum zwischen der Unterlage und dem Gegenhalter herausgezogen wird. Bei dieser Ausführungsform wird der Gassack symmetrisch zwischen der Unterlage und dem Gegenhalter zusammengeschoben, was das Ausmaß von Relativbewegungen zwischen der Zughülle und der Wandung des Gassacks verringert und zu gleichmäßigeren Falten in der Wandung des Gassacks führt.

Die Erfindung schafft auch einen Gassack, der mittels dem Verfahren gefaltet ist und dessen Wandung von außen nach innen zusammengeschoben ist und daher in einer Vielzahl von Einzelfalten verläuft. Dieser Gassack zeichnet sich dadurch aus, daß die Wandung des Gassacks in den Bereichen, in denen die geringste Relativbewegung gegenüber der Zughülle aufgetreten ist, die wenigsten Falten aufweist und in den anderen Bereichen entsprechend mehr Einzelfalten aufweist. Wenn die Zughülle nur an ihrem ersten Ende aus dem Raum zwischen Gegenhalter und Unterlage herausgezogen wird, weist die Wandung des Gassacks in ihrem der Durchführung gegenüberliegenden Bereich die geringste Anzahl von Einzelfalten auf. Im Bereich der Durchführung weist die Wandung dagegen die höchste Anzahl von Einzelfalten auf, da die Wandung dort von allen Seiten zusammengeschoben wird und nach unten chaotisch in das Innere des Gassacks hin ausweicht. Wenn die Zughülle an zwei Enden aus dem Raum zwischen Gegenhalter und Unterlage herausgezogen wird, wird die Wandung im Umfangsbereich des Gassacks die geringsten Falten aufweisen, da sie dort mit geringer Relativbewegung zwischen Zughülle und Wandung radial nach innen gedrückt wurde. Dagegen werden die Bereiche der Wandung des Gassacks, die unmittelbar gegenüber den beiden Durchführungen liegen, die meisten Einzelfalten aufweisen.

Vorteilhafte Ausgestaltungen der Erfindung ergeben sich aus den Unteransprüchen.

Die Erfindung wird nachfolgend anhand zweier Ausführungsformen beschrieben, die in den beigefügten Zeichnungen dargestellt sind. In diesen zeigen:
- Figur 1 in einer schematischen Schnittansicht eine Faltmaschine, mittels der ein Gassack gemäß einer ersten Ausführungsform der Erfindung zusammengeschoben werden kann;
- Figur 2 in einem schematischen S chnitt einen Gassack;
- Figur 3 in einer schematischen Draufsicht einen in einer Faltmaschine angeordneten Gassack; und
- Figur 4 in einer schematischen Schnittansicht eine zweite Faltmaschine, mittels der ein Gassack gemäß einer zweiten Ausführungsform der Erfindung zusammengeschoben werden kann.

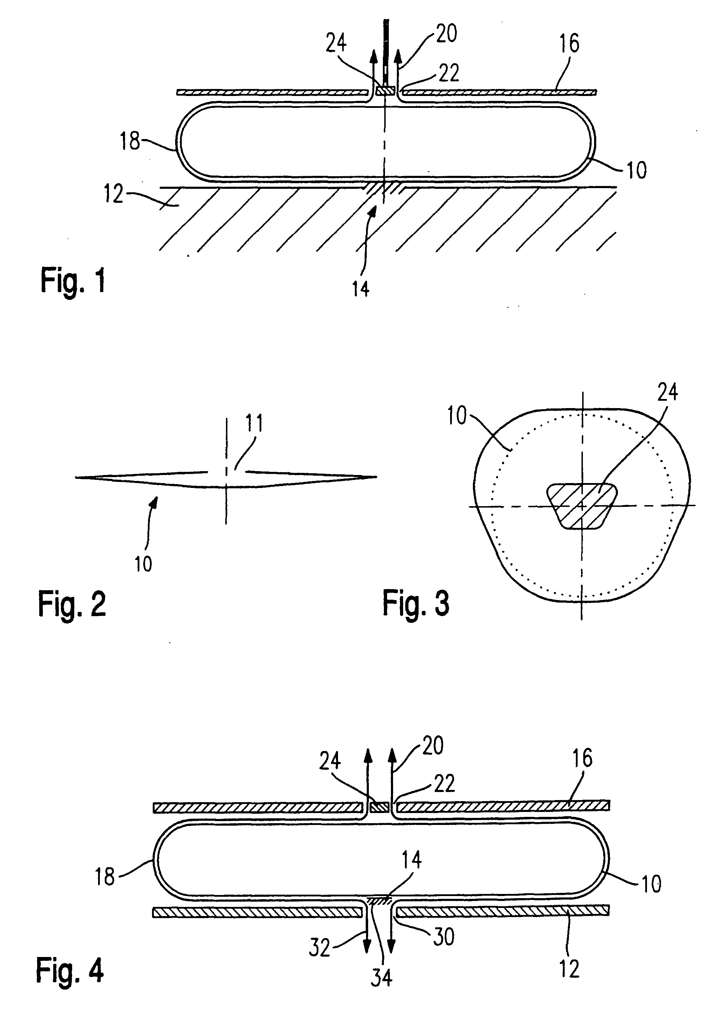

In Figur 1 ist eine erste Faltmaschine gezeigt, mittels der ein Gassack 10 zusammengeschoben werden kann, der eine Einblasöffnung 11 aufweist (siehe Figur 2). Der Gassack 10 wird auf einer Unterlage 12 der Faltmaschine ausgebreitet und dort mittels einer Spannvorrichtung 14 befestigt. Die Spannvorrichtung 14 kann beispielsweise am Rand der Einblasöffnung 11 angreifen und den Gassack auf der Unterlage festspannen. Die Spannvorrichtung 14 sollte den Gassack an einer Fläche festspannen, die möglichst der späteren Grundfläche des zum Einbau fertigen gefalteten Gassackpakets entspricht. Gegenüber der Unterlage 12 und parallel zu dieser wird ein Gegenhalter 16 angeordnet, dessen Abstand von der Unterlage 12 der Höhe der Aufnahme eines Gehäuses entspricht, in welchem der zusammengeschobene Gassack später angeordnet werden soll. Sowohl die Unterlage 12 als auch der Gegenhalter 16 sind größer als der Gassack 10, reichen also über dessen Außenrand hinaus.

Der Gassack 10 ist von einer Zughülle 18 umgeben, deren eines Ende 20 durch eine Durchführung 22 im Gegenhalter 16 aus dem Raum zwischen der Unterlage 12 und dem Gegenhalter 16 herausgeführt ist. Der Verlauf der Durchführung 22 durch den Gegenhalter 16 entspricht der Kontur, die der gefaltete Gassack haben soll. Im Inneren der Durchführung 22 ist ein Stempel 24 angeordnet, der dem Verlauf der Durchführung 22 angepaßt ist. Wie in Figur 3 zu sehen ist, kann der Stempel 24 beispielsweise trapezförmig sein, so daß auch die Durchführung 22 einen trapezförmigen Verlauf hat.

Die Zughülle 18 kann sackartig mit einer geschlossenen Wandung ausgeführt sein. Alternativ ist es möglich, eine Vielzahl von nebeneinanderliegenden Bändern zu verwenden, die beispielsweise im Bereich der Spannvorrichtung 14 an der Unterlage 12 befestigt sind.

Zu Beginn des Faltens des Gassacks 10 wird dieser zwischen der Unterlage 12 und dem Gegenhalter 16 entfaltet. Aufgrund des geringen Abstandes zwischen der Unterlage 12 und dem Gegenhalter 16 hat der Gassack dabei eine Form, die gegenüber seinem frei im Raum entfalteten Zustand stark abgeplattet ist.

Zum Enfalten des Gassacks kann eine (nicht dargestellte) Aufblasvorrichtung verwendet werden, die durch die Spannvorrichtung 14 hindurch mit dem Inneren des Gassacks in Strömungsverbindung steht.

Zum Zusammenschieben des Gassacks wird die Zughülle 18 aus dem Raum zwischen der Unterlage 12 und dem Gegenhalter 16 durch die Durchführung 22 hindurch herausgezogen. Zu diesem Zweck wird einfach am ersten Ende 20 der Zughülle 18 angezogen. Gleichzeitig entlüftet die Aufblasvorrichtung den Gassack kontrolliert. Wenn die Zughülle 18 soweit wie möglich aus dem Raum zwischen der Unterlage 12 und dem Gegenhalter 16 herausgezogen ist, hat der im Inneren der Zughülle 18 zusammengeschobene Gassack 10 eine Kontur, die dem Verlauf der Durchführung 22 entspricht, beispielsweise trapezförmig.

In Figur 4 ist eine zweite Faltmaschine gezeigt. Für die von der ersten Ausführungsform bekannten Bauteile werden dieselben Bezugszeichen verwendet, und es wird auf die obigen Erläuterungen verwiesen.

Im Unterschied zur ersten Ausführungsform ist bei der zweiten Faltmaschine eine Durchführung 30 in der Unterlage 12 vorgesehen. Durch die zweite Durchführung 30 ist ein zweites Ende 32 der Zughülle 18 geführt. Im Inneren der zweiten Durchführung 30 ist ein Mittelelement 34 angeordnet, dessen Funktion derjenigen des Stempels 24 entspricht und das mit der Spannvorrichtung 14 versehen ist.

Zum Zusammenlegen des Gassacks wird bei der zweiten Faltmaschine an den beiden Enden der Zughülle 18 angezogen, also am ersten Ende 20 nach oben und am zweiten Ende 32 nach unten. Somit wird die Zughülle 18 symmetrisch aus dem Raum zwischen der Unterlage 12 und dem Gegenhalter 16 herausgezogen, und der Gassack wird symmetrisch auf die für ihn vorgesehene Kontur zusammengeschoben.

Das beschriebene Verfahren kann auch bei einem doughnut-förmigen Gassack angewandt werden, bei dem der Gassack durch eine Ringkammer und eine vom Insassen aus gesehene Einbuchtung gekennzeichnet ist.

## Patentansprüche

1. Verfahren zum Falten eines Gassacks (10) für ein Fahrzeuginsassen-Rückhaltesystem mittels der folgenden Schritte:
- der Gassack wird zwischen einer Unterlage (12) und einem Gegenhalter (16) entfaltet, wobei sich um den Gassack (10) herum eine Zughülle (18) erstreckt, die an einem ersten Ende (20) durch den Gegenhalter hindurchgeführt ist, wobei die Durchführung (22) der Zughülle (18) durch den Gegenhalter (16) einen Verlauf hat, welcher der Kontur entspricht, die der gefaltete Gassacks (10) haben soll;
- die Zughülle (18) wird mittels des ersten Endes (20) aus dem Raum zwischen der Unterlage (12) und dem Gegenhalter (16) herausgezogen, so daß der Gassack (10) im Inneren der Zughülle (18) zusammengeschoben wird.

2. Verfahren nach Anspruch 1, **dadurch gekennzeichnet, daß** im Inneren der Durchführung (22) durch den Gegenhalter (16) ein Stempel (24) angeordnet ist.

3. Verfahren nach einem der Ansprüche 1 und 2, **dadurch gekennzeichnet, daß** an der Unterlage (12) ein Mittelelement (34) vorgesehen ist, das mit einer Spannvorrichtung (14) für den Gassack versehen ist.

4. Verfahren nach einem der vorhergehenden Ansprüche, **dadurch gekennzeichnet, daß** die Zughülle (18) ein zweites Ende hat, das durch eine Durchführung (30) in der Unterlage (12) geführt ist, wobei die Durchführung (30) einen Verlauf hat, welcher der Kontur entspricht, die der gefaltete Gassack haben soll, und daß die Zughülle (18) auch mittels des zweiten Endes (32) aus dem Raum zwischen der Unterlage (12) und dem Gegenhalter (16) herausgezogen wird.

5. Verfahren nach Anspruch 3 und Anspruch 4, **dadurch gekennzeichnet, daß** das Mittelelement (34) im Inneren der Durchführung (30) durch die Unterlage (12) angeordnet ist.

6. Verfahren nach einem der vorhergehenden Ansprüche, **dadurch gekennzeichnet, daß** die Zughülle (18) eine geschlossene Wandung aufweist.

7. Verfahren nach einem der vorhergehenden Ansprüche, **dadurch gekennzeichnet, daß** die Zughülle (18) aus mehreren nebeneinander angeordneten Bändern gebildet ist.

8. Gefalteter Gassack (10) mit einer Wandung und einer Einblasöffnung in der Wandung, **dadurch gekennzeichnet, daß** er durch ein Verfahren nach einem der vorhergehenden Ansprüche gefaltet wurde und daß die Wandung im Bereich der Durchführung die höchste Anzahl von Einzelfalten aufweist.

9. Gefalteter Gassack (10) mit einer Wandung und einer Einblasöffnung in der Wandung, **dadurch gekennzeichnet, daß** er durch ein Verfahren nach einem der vorhergehenden Ansprüche gefaltet wurde und daß er im Bereich der Einblasöffnung vergleichsweise wenige Falten aufweist, und in dem der Einblasöffnung gegenüberliegenden Bereich der Wandung vergleichsweise viele Einzelfalten aufweist.

10. Gefalteter Gassack (10) mit einer Wandung und einer Einblasöffnung in der Wandung, **dadurch gekennzeichnet, daß** die Wandung in den Bereichen, die den radialen Abstand von der Einblasöffnung haben, die geringste Zahl von Einzelfalten aufweist.

## Claims

1. A method of folding a gas bag (10) for a vehicle occupant restraint system by means of the following steps:
- unfolding the gas bag between a base (12) and a hold-down (16), a traction envelope (18) extending around the gas bag (10) and being passed through the hold-down at a first end (20), the lead-through (22) of the traction envelope (18) through the hold-down (16) being contoured so as to correspond to the contour which the folded gas bag (10) is required to have;
- pulling out the traction envelope (18) from the space between the base (12) and the hold-down (16) by means of the first end (20), so that the gas bag (10) is pushed together inside the traction envelope (18).

2. The method as set forth in claim 1, **characterized in that** a plunger (24) is arranged inside the lead-through (22) passing through the hold-down (16).

3. The method as set forth in claim 1 or claim 2, **characterized in that** provided at the base (12) is a middle element (34) which is provided with a tensioning device (14) for the gas bag.

4. The method as set forth in any of the preceding claims, **characterized in that** the traction envelope (18) has a second end guided through a lead-through (30) in the base (12), the lead-through (30) being contoured so as to correspond to the contour which the folded gas bag is required to have, and that the traction envelope (18) is pulled out from the space between the base (12) and the hold-down (16) also by means of the second end (32).

5. The method as set forth in claim 3 and claim 4, **characterized in that** the middle element (34) is arranged inside the lead-through (30) passing through the base (12).

6. The method as set forth in any of the preceding claims, **characterized in that** the traction envelope (18) has a closed wall.

7. The method as set forth in any of the preceding claims, **characterized in that** the traction envelope (18) is formed of several bands arranged juxtaposed.

8. A folded gas bag (10) comprising a wall and an inflation opening in the wall, **characterized in that** it has been folded by a method as set forth in any of the preceding claims and that the wall in the region of the lead-through has the highest number of single folds.

9. A folded gas bag (10) comprising a wall and an inflation opening in the wall, **characterized in that** it has been folded by a method as set forth in any of the preceding claims and that it has comparatively few folds in the region of the inflation opening and comparatively many single folds in the region of the wall opposite the inflation opening.

10. A folded gas bag (10) comprising a wall and an inflation opening in the wall, **characterized in that** the wall has the least number of single folds in the regions radially spaced away from the inflation opening.

## Revendications

1. Procédé de pliage d'un coussin à gaz (10) pour un système de retenue de passagers d'un véhicule, présentant les étapes suivantes :
- le coussin à gaz est déplié entre une base (12) et un contre-support (16), une enveloppe de traction (18) s'étendant autour du coussin à gaz (10), laquelle est passée à une première extrémité (20) à travers le contre-support, le passage (22) de l'enveloppe de traction (18) à travers le contre-support (16) ayant un tracé qui correspond au contour que doit avoir le coussin à gaz (10) plié ;
- l'enveloppe de traction (18) est extraite au moyen de la première extrémité (20) hors de l'espace entre la base (12) et le contre-support (16), de telle sorte que le coussin à gaz (10) est rassemblé à l'intérieur de l'enveloppe de traction (18).

2. Procédé selon la revendication 1, **caractérisé en ce qu'**un poinçon (24) est agencé à l'intérieur du passage (22) à travers le contre-support (16).

3. Procédé selon l'une des revendications 1 et 2, **caractérisé en ce que** sur la base (12) est prévu un élément médian (34) qui est pourvu d'un dispositif de serrage (14) pour le coussin à gaz.

4. Procédé selon l'une des revendications précédentes, **caractérisé en ce que** l'enveloppe de traction (18) a une deuxième extrémité qui est guidée à travers un passage (30) dans la base (12), le passage (30) ayant un tracé qui correspond au contour que doit avoir le coussin à gaz plié, et **en ce que** l'enveloppe de traction (18) est aussi retirée au moyen de la deuxième extrémité (32) hors de l'espace entre la base (12) et le contre-support (16).

5. Procédé selon la revendication 3 et la revendication 4, **caractérisé en ce que** l'élément médian (34) est agencé à l'intérieur du passage (30) à travers la base (12).

6. Procédé selon l'une des revendications précédentes, **caractérisé en ce que** l'enveloppe de traction (18) présente une paroi fermée.

7. Procédé selon l'une des revendications précédentes, **caractérisé en ce que** l'enveloppe de traction (18) est formée par plusieurs bandes agencées les unes à côté des autres.

8. Coussin à gaz (10) plié comportant une paroi et un orifice d'insufflation dans la paroi, **caractérisé en ce qu'**il a été plié conformément à un procédé selon l'une des revendications précédentes et **en ce que** la paroi présente dans la région du passage le plus grand nombre de plis individuels.

9. Coussin à gaz (10) plié comportant une paroi et un orifice d'insufflation dans la paroi, **caractérisé en ce qu'**il a été plié conformément à un procédé selon l'une des revendications précédentes et **en ce que** la paroi présente comparativement peu de plis dans la région du passage et comparativement beaucoup de plis individuels dans la région de la paroi, qui est opposée à l'orifice d'insufflation.

10. Coussin à gaz (10) plié comportant une paroi et un orifice d'insufflation dans la paroi, **caractérisé en ce que** la paroi présente le plus petit nombre de plis individuels dans les régions qui ont une distance radiale par rapport à l'orifice d'insufflation.
